# EUROPÄISCHE PATENTSCHRIFT

(11) **EP 1 455 122 B1**
(45) Veröffentlichungstag und Bekanntmachung des Hinweises auf die Patenterteilung: **07.10.2009**
(21) Anmeldenummer: 04004953.8
(22) Anmeldetag: 03.03.2004
(51) Int. Cl.: F16J 15/32

(54) **Dichtring**
Seal ring
Bague d'étanchéité

(30) Priorität: 07.03.2003 DE 10309907
(43) Veröffentlichungstag der Anmeldung: 08.09.2004
(73) Patentinhaber: Carl Freudenberg KG, 69469 Weinheim (DE)
(72) Erfinder: Guillerme, Celine, 52360 Neuilly L'evèque (FR); Kammerer, Eric, 52200 Langres (FR)

(56) Entgegenhaltungen:
- US-A- 5 462 287
- US-A1- 2003 098 549
- US-B1- 6 428 013

## Beschreibung

### Technisches Gebiet

Die Erfindung betrifft einen Dichtring, umfassend eine Dichtmanschette aus polymerem Werkstoff, die während der bestimmungsgemäßen Verwendung, im Längsschnitt betrachtet, im wesentlichen L-förmig ausgebildet ist, mit einem sich im wesentlichen in radialer Richtung erstreckenden Befestigungsbereich und einem sich im wesentlichen in axialer Richtung erstreckenden Dichtbereich, der die Oberfläche eines abzudichtenden Maschinenelements mit radialer Vorspannung dichtend umschließt, wobei der Dichtbereich auf der der Oberfläche zugewandten Seite zumindest eine Rückfördereinrichtung zur Förderung von abzudichtendem Medium in Richtung des abzudichtenden Raums aufweist, wobei die Rückfördereinrichtung durch eine Profilierung gebildet ist, mit einem Fördervolumen, das vom abzudichtenden Raum in Richtung Umgebung reduziert ist, wobei die Rückfördereinrichtung durch zumindest eine spiralförmige Rückfördernut gebildet ist und wobei die Rückfördernut eine sich vom abzudichtenden Raum entlang des Dichtbereichs in Richtung Umgebung verringernde Nuttiefe aufweist.

### Stand der Technik

Ein solcher Dichtring ist aus der US 6,428,013 B1 bekannt. In Fig. 7 ist ein Ausführungsbeispiel gezeigt, bei dem die Dichtmanschette in Richtung der Umgebung/Luftseite vorgewölbt ist, wobei die Dichtmanschette auf der der abzudichtenden Fläche zugewandten Seite eine Rückfördereinrichtung in Form einer spiralförmigen Rückfördernut aufweist, mit einer sich vom abzudichtenden Raum entlang des Dichtbereichs in Richtung Umgebung verringernden Nuttiefe.

Ein weiterer Dichtring ist aus der DE 199 22 842 A1 bekannt. Der vorbekannte Dichtring umfasst eine Dichtmanschette aus polymerem Werkstoff, die während der bestimmungsgemäßen Verwendung, im Längsschnitt betrachtet, im wesentlichen L-förmig ausgebildet ist, mit einem sich im wesentlichen in radialer Richtung erstreckenden Befestigungsbereich und einem sich im wesentlichen in axialer Richtung erstreckenden Dichtbereich, der die Oberfläche eines abzudichtenden Maschinenelements, das als Welle ausgebildet ist, mit radialer Vorspannung dichtend umschließt. Der Dichtbereich ist in Richtung des abzudichtenden Raums vorgewölbt und weist auf der der Oberfläche zugewandten Seite eine Rückfördereinrichtung zur Förderung von abzudichtendem Medium in Richtung des abzudichtenden Raums auf.
Die Rückfördereinrichtung des vorbekannten Dichtrings erstreckt sich von seinem freien, dem Befestigungsbereich abgewandten Ende der Dichtmanschette bis zu einer Mikrolippe, die auf der Oberfläche des abzudichtenden Maschinenelements abgestützt ist. Die Rückfördereinrichtung ist als Nut ausgebildet, wobei die Nut vom freien Ende der Dichtmanschette bis zur Mikrolippe, also in ihrem Dichtbereich, in ihrer Geometrie unverändert ist; das Rückfördervolumen in diesem Bereich ist konstant.
Im bogenförmigen Übergangsbereich der Dichtmanschette, vom Dichtbereich zum Befestigungsbereich, ist ein weiterer Nutabschnitt angeordnet, wobei die Nut dieses Nutabschnitts in Richtung Umgebung offen ist und bezüglich der Rückförderung von abzudichtendem Medium in Richtung des abzudichtenden Raums ohne Funktion ist. Dieser Nutabschnitt ist abweichend von dem Nutabschnitt gestaltet, der sich vom freien Ende der Dichtmanschette bis zur Mikrolippe erstreckt.

Der Erfindung liegt die Aufgabe zu Grunde, einen Dichtring der Eingangs genannten Art derart weiterzuentwickeln, dass die Förderleistung entlang des Dichtbereichs auf die in den abzudichtenden Raum zurück zu fördernde Menge von abzudichtendem Medium abgestimmt ist.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist ein Dichtring vorgesehen, bei dem das Verhältnis aus größter Nuttiefe zu kleinster Nuttiefe im Dichtbereich 2 bis 6 beträgt.
Hierbei ist von Vorteil, dass die Förderleistung der Rückfördereinrichtung auf die in den abzudichtenden Raum zurück zu fördernde Menge von abzudichtendem Medium abgestimmt ist, das sich auf der Oberfläche des abzudichtenden Maschinenelements im Dichtbereich der Dichtmanschette befindet. Die Förderleistung der Rückfördereinrichtung ist auf der dem abzudichtenden Raum zugewandten Seite des Dichtbereichs größer als auf der der Umgebung zugewandten Seite. Durch die an die in den abzudichtenden Raum zurück zu fördernde Menge von abzudichtendem Medium angepasste Geometrie der Rückfördereinrichtung kann der Dichtbereich, bezogen auf die erforderliche Wirksamkeit in seinen jeweiligen Teilbereichen, besonders effizient gestaltet werden. Beim erfindungsgemäßen Dichtring ist es nicht erforderlich, auf der dem abzudichtenden Raum abgewandten Seite des Dichtbereichs eine Rückfördereinrichtung mit überdimensioniertem Fördervolumen vorzusehen und daraus resultierenden überdimensionierten Abmessungen der Dichtmanschette.

Die Rückfördereinrichtung ist durch zumindest eine spiralförmige Rückfördernut gebildet. Derartige Rückfördereinrichtungen sind aus dem Stand der Technik allgemein bekannt. Sie sind einfach und kostengünstig herstellbar und weisen gute Gebrauchseigenschaften während einer langen Gebrauchsdauer auf.

Die Rückfördernut weist eine sich vom abzudichtenden Raum entlang des Dichtbereichs in Richtung der Umgebung verringernde Nuttiefe auf. Weist die Dichtmanschette nur einen Parameter auf, der sich entlang des Dichtbereichs ändert, also beispielsweise die Nuttiefe, ist die Dichtmanschette und damit der gesamte Dichtring einfach und kostengünstig herstellbar. Die entlang des Dichtbereichs sich ändernde Nuttiefe reicht aus, um ein Fördervolumen zu erreichen, das vom abzudichtenden Raum in Richtung der Umgebung reduziert ist.

Für die meisten Anwendungsfälle hat es sich als vorteilhaft bewährt, wenn das Verhältnis aus größter Nuttiefe und kleinster Nuttiefe im Dichtbereich 2 bis 6, bevorzugt 4 beträgt. Bei derartigen Größenverhältnissen ist die spezifische Förderleistung/das spezifische Fördervolumen, bezogen auf die jeweils zurück zu fördernde Menge von abzudichtendem Medium entlang des gesamten Dichtbereichs gleich groß.

Das Fördervolumen ist entlang des Dichtbereichs, vom abzudichtenden Raum in Richtung Umgebung, bevorzugt kontinuierlich reduziert. Dadurch wird erreicht, dass das Fördervolumen, entlang des Dichtbereichs betrachtet, proportional zur Menge des jeweils zurück in den abzudichtenden Raum zu fördernden abzudichtenden Mediums ist. Auf der dem abzudichtenden Raum zugewandten Seite ist die Rückfördereinrichtung derart dimensioniert, dass das Fördervolumen vergleichsweise groß ist, um das in diesem Bereich am Dichtbereich anstehende vergleichsweise große Volumen von abzudichtendem Medium wieder zurück in den abzudichtenden Raum zu fördern. Entlang des Dichtbereichs in Richtung Umgebung reduziert sich die Menge an abzudichtendem Medium, so dass auf der der Umgebung zugewandten Seite des Dichtbereichs das Fördervolumen/die Förderleistung nur noch vergleichsweise gering zu sein braucht, um die geringe Menge von abzudichtendem Medium wieder zurück in den abzudichtenden Raum zu fördern.

Die Steigung und/oder die Breite der Rückfördernut kann entlang des Dichtbereichs im wesentlichen konstant sein. Die Herstellung der Dichtmanschette ist dadurch vereinfacht.

Die Steigung und/oder die Breite der Rückfördernut kann entlang des Dichtbereichs variiert sein. Vorzugsweise nimmt dabei die Steigung und/oder die Breite der Rückfördernut vom Befestigungsbereich zum freien Ende der Dichtmanschette ab. Dadurch wird die Wirkung der sich verringernden Nuttiefe unterstützt. Gleichzeitig wird in der Umgebung befindlicher Staub/Schmutz am Eindringen gehindert.

Der Dichtbereich kann, ausgehend vom Befestigungsflansch, axial in Richtung Umgebung vorgewölbt sein. Speziell für eine solche Bauform ist der Dichtring mit der erfindungsgemäßen Dichtmanschette von besonderem Vorteil.
Dichtmanschetten, die in Richtung der Umgebung vorgewölbt sind, haben den Vorteil, dass die radiale Anpressung der Dichtmanschette auf die Welle am freien Ende der Dichtmanschette gesteuert werden kann. Daraus resultiert eine gesteigerte Dichtwirkung und eine verlängerte Gebrauchsdauer. Am freien Ende der Dichtmanschette kann eine Vorschaltdichtung angebracht werden. Diese ist eine wirksame Absperrung gegen Staub/Schmutz. Eine solche Vorschaltdichtung ist einfach und kostengünstig herstellbar und weist kleine Abmessungen auf.

Bei der Montage in den Ringspalt zwischen der Welle und der aufnehmenden Bohrung wird die Dichtmanschette, montagebedingt, in ihre bestimmungsgemäße Gestalt verformt. Einem Montagekonus zur Montage der Dichtmanschette bedarf es nicht. Montagefehler sind bei einer solchen Ausgestaltung auf ein Minimum reduziert.

Die radiale Vorspannung, mit der der Dichtbereich die Oberfläche des abzudichtenden Maschinenelements dichtend umschließt, ist, im Längsschnitt betrachtet, derart unterschiedlich, dass der Dichtbereich auf seiner dem Befestigungsbereich zugewandten Seite eine höhere Anpressung aufweist als im Bereich seines freien Endes. Dies gilt insbesondere dann, wenn die Gestalt der Rückfördereinrichtung entlang des gesamten Dichtbereichs übereinstimmend wäre.

Um die radiale Anpressung speziell des freien Endes des Dichtbereichs an die Oberfläche des abzudichtenden Maschinenelements zu erhöhen und dadurch eine radiale Vorspannung zu erreichen, wie auf der dem Befestigungsbereich axial zugewandten Seite, ist es erforderlich, eine Materialschwächung in diesem Bereich, beispielsweise durch die Rückfördereinrichtung, zu minimieren. Dies kann beispielsweise dadurch erreicht werden, dass die Nuttiefe von der dem Befestigungsbereich zugewandten Seite entlang des Dichtbereichs in Richtung des freien Endes des Dichtbereichs, bei ansonsten gleichen Abmessungen, reduziert wird. Durch eine solche Ausgestaltung ist nicht nur die spezifische Förderleistung entlang des Dichtbereichs gleich sondern auch die radiale Vorspannung, mit der der Dichtbereich die Oberfläche des abzudichtenden Maschinenelements umschließt.

Die Dichtmanschette kann beispielsweise aus einem PTFE-Compound bestehen. PTFE ist ein Werkstoff, der gegen die meisten abzudichtenden Medien beständig ist und während der gesamten Gebrauchsdauer des Dichtrings nur einen vernachlässigbar geringen, abrasiven Verschleiß aufweist.

### Kurzbeschreibung der Zeichnung

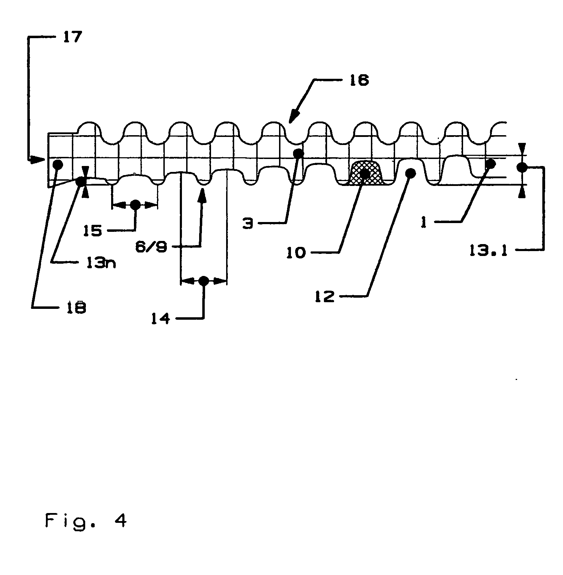

Zwei Ausführungsbeispiele des erfindungsgemäßen Dichtrings werden nachfolgend anhand der Figuren 1 bis 6 näher erläutert. Diese zeigen jeweils in schematischer Darstellung:
- Figur 1: ein erstes Ausführungsbeispiel in längsgeschnittener Darstellung, wobei die Dichtmanschette in Richtung der Umgebung vorgewölbt ist.
- Figur 2: den Dichtbereich der Dichtmanschette aus Figur 1,
- Figur 3: ein zweites Ausführungsbeispiel mit einer von Figur 1 abweichend gestalteten Dichtmanschette, wobei die Dichtmanschette in Richtung der Umgebung vorgewölbt ist.
- Figur 4: den Dichtbereich der Dichtmanschette aus Figur 3.
- Figur 5: ein drittes Ausführungsbeispiel, wobei die Steigung und/oder die Breite der Rückfördernut entlang des Dichtbereichs variiert ist. Die Dichtmanschette ist in Richtung der Umgebung vorgewölbt.
- Figur 6: einen Gehäuseverschlussdeckel, in den der erfindungsgemäße Dichtring integriert ist.

### Ausführung der Erfindung

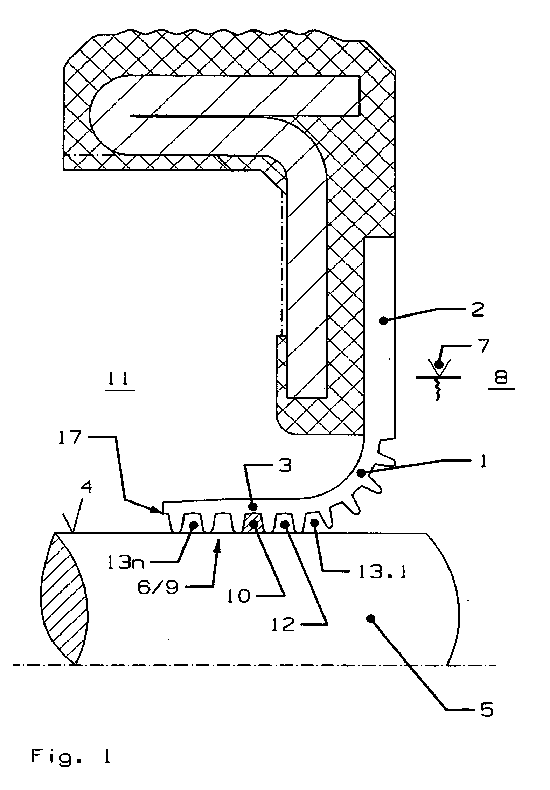

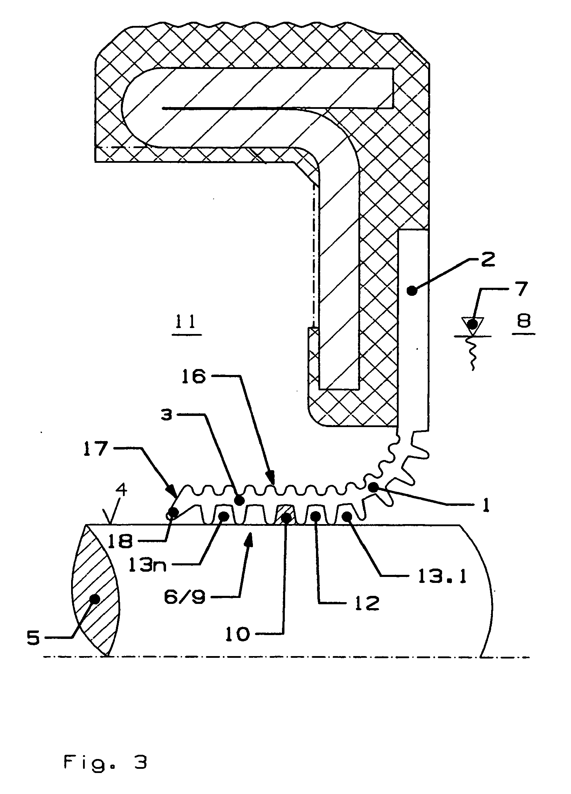

In den Figuren 1 und 3 ist jeweils ein Dichtring während seiner bestimmungsgemäßen Verwendung gezeigt.

Das abzudichtende Maschinenelement 5 wird in den hier gezeigten Ausführungsbeispielen jeweils durch eine Welle gebildet.

Die in den Figuren 1 und 3 gezeigten Dichtringe umfassen jeweils eine Dichtmanschette 1 aus polymerem Werkstoff, in den hier gezeigten Ausführungsbeispielen aus einem PTFE-Compound. Im Längsschnitt betrachtet, sind die Dichtmanschetten 1 jeweils L-förmig ausgebildet und umfassen einen sich im wesentlichen in radialer Richtung erstreckenden Befestigungsbereich 2 und einen sich im wesentlichen in axialer Richtung erstreckenden Dichtbereich 3. Der Befestigungsbereich 2 und der Dichtbereich 3 sind in den hier gezeigten Ausführungsbeispielen einstückig ineinander übergehend und materialeinheitlich ausgebildet.

Der Dichtbereich 3 der Dichtmanschette 1 umschließt die Oberfläche 4 des abzudichtenden Maschinenelements 5 mit radialer Vorspannung dichtend. Auf der der Oberfläche 4 radial zugewandten Seite des Dichtbereichs 3 ist eine als Rückfördereinrichtung 6 ausgebildete, spiralförmige Rückfördernut 12 angeordnet, zur Förderung von abzudichtendem Medium 7 in Richtung des abzudichtenden Raums 8.

In beiden hier gezeigten Ausführungsbeispielen ist die Dichtmanschette 1 axial in Richtung der Umgebung 11 vorgewölbt. Entscheidend ist, dass die als Rückfördereinrichtung 6 ausgebildete Profilierung 9 ein Fördervolumen 10/eine Förderleistung aufweist, das/die vom abzudichtenden Raum 8 in Richtung Umgebung 11 reduziert ist. Die spezifische Förderleistung entlang des gesamten Dichtbereichs ist dadurch gleich; die Förderleistung der Rückfördereinrichtung 6 ist auf die in den abzudichtenden Raum 8 zurück zu fördernde Menge abzudichtenden Mediums 7 abgestimmt.

In den hier gezeigten Ausführungsbeispielen sind sowohl die Steigung 14 als auch die Breite 15 der Rückfördernut 12 entlang des Dichtbereichs 3 im wesentlichen konstant. Die einzige Variable zur Erreichung einer konstanten spezifischen Förderleistung ist die Nuttiefe 13. Die Nuttiefe 13 ist entlang des Dichtbereichs 3 derart variiert, dass die Rückfördernut 12 eine sich vom abzudichtenden Raum 8 entlang des Dichtbereichs 3 in Richtung der Umgebung 11 verringernde Nuttiefe 13 aufweist. Das Verhältnis aus der größten Nuttiefe 13.1 auf der dem abzudichtenden Raum 8 zugewandten Seite zur kleinsten Nuttiefe 13.n im Dichtbereich beträgt in den hier gezeigten Ausführungsbeispielen 4.

In Figur 1 ist ein erstes Ausführungsbeispiel des erfindungsgemäßen Dichtrings gezeigt. Die Dichtmanschette 1 weist nur auf der abzudichtenden Oberfläche 4 des Maschinenelements 5 eine Profilierung 9 in Form einer Rückfördernut 12 auf. Auf der der Oberfläche 4 abgewandten Seite der Dichtmanschette 1 ist diese eben ausgebildet.

Die Rückfördernut 12 ist, im Längsschnitt betrachtet, im wesentlichen trapezförmig ausgebildet.

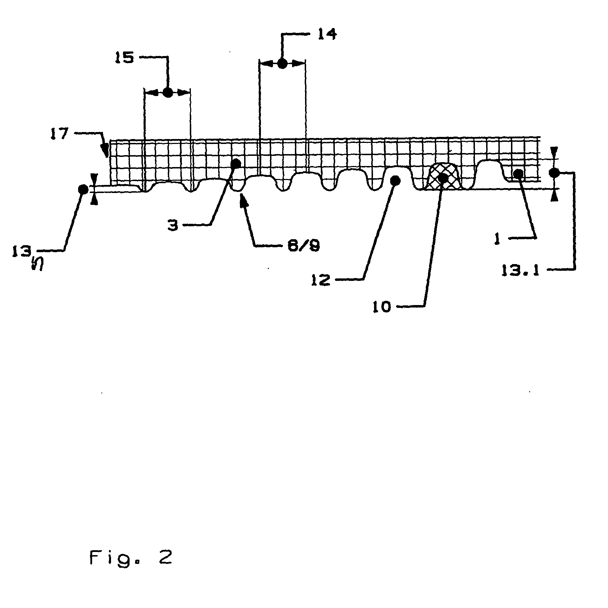

In Figur 2 ist der Dichtbereich 3 der Dichtmanschette 1 vergrößert dargestellt.

In Figur 3 ist ein zweites Ausführungsbeispiel des erfindungsgemäßen Dichtrings gezeigt, der sich vom Dichtring aus Figur 1 durch eine abweichend gestaltete Dichtmanschette 1 unterscheidet.

Abweichend von der Dichtmanschette 1 aus Figur 1 ist die Dichtmanschette 1 aus Figur 3 zusätzlich auf der der Oberfläche 4 radial abgewandten Seite des Dichtbereichs 3 mit einer zweiten Profilierung 16 versehen. Die zweite Profilierung 16 ist in der Regel weniger tief und mit kleinerer Teilung als die erste Profilierung 9 ausgeführt.

Außerdem weist das freie Ende 17 der Dichtmanschette 1 eine in Richtung der Umgebung 11 angeordnete Vorschaltdichtung 18 auf, die Verunreinigungen aus der Umgebung 11 vom Dichtbereich 3 fern hält. Die Vorschaltdichtung 18 ist einstückig ineinander übergehend und materialeinheitlich mit der Dichtmanschette ausgeführt.

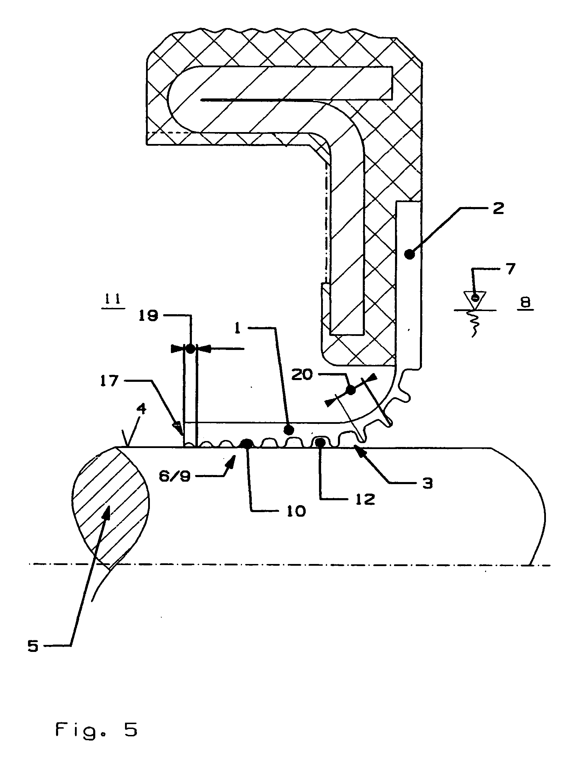

In Figur 5 ist ein drittes Ausführungsbeispiel gezeigt, bei dem die Breite und/oder die Steigung 19/20 der Rückfördernut 12 entlang des Dichtbereichs 3 variiert ist.

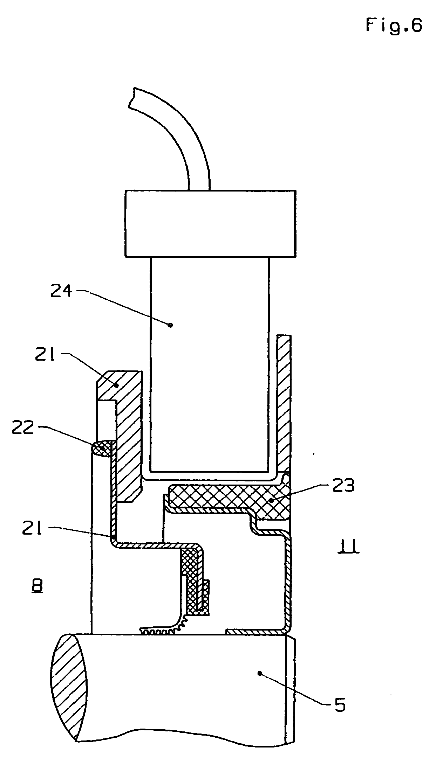

In Figur 6 ist ein Gehäuseverschlussdeckel 21 gezeigt, in den der erfindungsgemäße Dichtring integriert ist. Die statisch wirkende Dichtung am Gehäuseverschlussdeckel 21 ist mit der Bezugsziffer 22, der Messwertgeber/das Multipolrad mit der Bezugsziffer 23 und der Messwertaufnehmer/Sensor mit der Bezugsziffer 24 versehen.

Die hier dargestellten Ausführungsbeispiele stellen keine Begrenzung des Schutzumfangs dar, insbesondere kann die Rückfördereinrichtung 6 spiralförmig, schraubengangförmig oder konzentrisch gestaltet sein, eingängig oder mehrgängig, und die Rückfördernuten können, im Längsschnitt betrachtet, beispielsweise trapezförmig, dreieckförmig, sägezahnförmig oder raupenförmig sein. Die Rückfördernut 12 kann abgesperrt sein, zum Beispiel durch ein Schott und/oder durch einen umlaufenden Vorsprung. Abweichend von einem PTFE-Compound, aus dem die Manschette 1 besteht, können auch andere geeignete Werkstoffe für die Dichtmanschette 1 zur Anwendung gelangen.

## Patentansprüche

1. Dichtring, umfassend eine Dichtmanschette (1) aus polymerem Werkstoff, die während der bestimmungsgemäßen Verwendung, im Längsschnitt betrachtet, im wesentlichen L-förmig ausgebildet ist, mit einem sich im wesentlichen in radialer Richtung erstreckenden Befestigungsbereich (2) und einem sich im wesentlichen in axialer Richtung erstreckenden Dichtbereich (3), der die Oberfläche (4) eines abzudichtenden Maschinenelements (5) mit radialer Vorspannung dichtend umschließt, wobei der Dichtbereich (3) auf der der Oberfläche (4) zugewandten Seite zumindest eine Rückfördereinrichtung (6) zur Förderung von abzudichtendem Medium (7) in Richtung des abzudichtenden Raums (8) aufweist, wobei die Rückfördereinrichtung (6) durch eine Profilierung (9) gebildet ist, mit einem Fördervolumen (10), das vom abzudichtenden Raum (8) in Richtung Umgebung (11) reduziert ist, wobei die Rückfördereinrichtung (6) durch zumindest eine spiralförmige Rückfördernut (12) gebildet ist und wobei die Rückfördernut (12) eine sich vom abzudichtenden Raum (8) entlang des Dichtbereichs (3) in Richtung Umgebung (11) verringernde Nuttiefe (13) aufweist, **dadurch gekennzeichnet, daß** das Verhältnis aus größter Nuttiefe (13.1) zu kleinster Nuttiefe (13.n) im Dichtbereich (3) 2 bis 6 beträgt.

2. Dichtring nach Anspruch 1, **dadurch gekennzeichnet, dass** das Fördervolumen (10) entlang des Dichtbereichs (3), vom abzudichtenden Raum (8) in Richtung Umgebung (11), kontinuierlich reduziert ist.

3. Dichtring nach einem der Ansprüche 1 oder 2, **dadurch gekennzeichnet, dass** das Fördervolumen (10), entlang des Dichtbereichs (3) betrachtet, proportional zur Menge des zurück in den abzudichtenden Raum (8) zu fördernden abzudichtenden Mediums (7) ist.

4. Dichtring nach einem der Ansprüche 1 bis 3, **dadurch gekennzeichnet, dass** die Steigung (14) der Rückfördernut (12) entlang des Dichtbereichs (3) im wesentlichen konstant ist.

5. Dichtring nach einem der Ansprüche 1 bis 4, **dadurch gekennzeichnet, dass** die Breite (15) der Rückfördernut (12) entlang des Dichtbereichs (3) im wesentlichen konstant ist.

6. Dichtring nach einem der Ansprüche 1 bis 5, **dadurch gekennzeichnet, dass** die Breite und/oder die Steigung (19,20) der Rückfördernut (12) entlang des Dichtbereichs (3) variiert ist.

7. Dichtring nach einem der Ansprüche 1 bis 6, **dadurch gekennzeichnet, dass** der Dichtbereich (3), ausgehend vom Befestigungsbereich (2), axial in Richtung Umgebung (11) vorgewölbt ist.

8. Dichtring nach einem der Ansprüche 1 bis 7, **dadurch gekennzeichnet, dass** die Dichtmanschette (1) aus einem PTFE-Compound besteht.

9. Gehäuseverschlussdeckel umfassend einen Dichtring nach einem der Ansprüche 1 bis 8, der in den Gehäuseverschlussdeckel integriert ist.

## Claims

1. Sealing ring, comprising a sealing collar (1) which is made from polymeric material and, during correct use, is of substantially L-shaped design, as viewed in longitudinal section, with a fastening region (2) which extends substantially in the radial direction, and with a sealing region (3) which extends substantially in the axial direction and, with radial prestress, sealingly surrounds the surface (4) of a machine element (5) which is to be sealed, wherein the sealing region (3), on the side facing the surface (4), has at least one return device (6) for conveying medium (7) which is to be sealed in the direction of the space (8) which is to be sealed, wherein the return device (6) is formed by a profiling (9), with a volumetric delivery (10) which is reduced from the space (8) which is to be sealed in the direction of the surroundings (11), wherein the return device (6) is formed by at least one spiral return groove (12), and wherein the return groove (12) has a groove depth (13) which is reduced in size from the space (8) which is to be sealed along the sealing region (3) in the direction of the surroundings (11), **characterized in that** the ratio of greatest groove depth (13.1) to smallest groove depth (13.n) in the sealing region (3) is 2 to 6.

2. Sealing ring according to Claim 1, **characterized in that** the volumetric delivery (10) is reduced continuously along the sealing region (3) from the space (8) which is to be sealed in the direction of the surroundings (11).

3. Sealing ring according to either of Claims 1 and 2, **characterized in that** the volumetric delivery (10), as viewed along the sealing region (3), is proportional to the quantity of medium (7) which is to be sealed and which is to be conveyed back into the space (8) which is to be sealed.

4. Sealing ring according to one of Claims 1 to 3, **characterized in that** the pitch (14) of the return groove (12) along the sealing region (3) is substantially constant.

5. Sealing ring according to one of Claims 1 to 4, **characterized in that** the width (15) of the return groove (12) along the sealing region (3) is substantially constant.

6. Sealing ring according to one of Claims 1 to 5, **characterized in that** the width and/or the pitch (19, 20) of the return groove (12) along the sealing region (3) is varied.

7. Sealing ring according to one of Claims 1 to 6, **characterized in that** the sealing region (3) is precurved axially from the fastening region (2) in the direction of the surroundings (11).

8. Sealing ring according to one of Claims 1 to 7, **characterized in that** the sealing collar (1) is composed of a PTFE compound.

9. Housing closure cover, comprising a sealing ring according to one of Claims 1 to 8 which is integrated in the housing closure cover.

## Revendications

1. Bague d'étanchéité, comprenant une manchette d'étanchéité (1) en matériau polymère, qui, pendant l'utilisation conforme, vue en coupe longitudinale, est réalisée essentiellement en forme de L, avec une région de fixation (2) s'étendant essentiellement dans la direction radiale et une région d'étanchéité (3) s'étendant essentiellement dans la direction axiale, qui entoure de manière hermétique avec précontrainte radiale la surface (4) d'un élément de machine (5) à étancher, la région d'étanchéité (3) présentant, du côté tourné vers la surface (4), au moins un dispositif de reflux (6) pour refouler du fluide à étancher (7) dans la direction de l'espace à étancher (8), le dispositif de reflux (6) étant formé par un profilage (9), avec un volume de refoulement (10) qui est réduit depuis l'espace à étancher (8) dans la direction de l'environnement (11), le dispositif de reflux (6) étant formé par au moins une rainure de reflux en forme de spirale (12), et la rainure de reflux (12) présentant une profondeur de rainure (13) se réduisant depuis l'espace à étancher (8) le long de la région d'étanchéité (3) dans la direction de l'environnement (11), **caractérisée en ce que** le rapport de la plus grande profondeur de rainure (13.1) à la plus petite profondeur de rainure (13.n) dans la région d'étanchéité (3) vaut de 2 à 6.

2. Bague d'étanchéité selon la revendication 1,
**caractérisée en ce que** le volume de refoulement (10) est réduit en continu le long de la région d'étanchéité (3), depuis l'espace à étancher (8) dans la direction de l'environnement (11).

3. Bague d'étanchéité selon l'une quelconque des revendications 1 ou 2, **caractérisée en ce que** le volume de refoulement (10), considéré le long de la région d'étanchéité (3), est proportionnel à la quantité de fluide (7) à étancher à refouler dans l'espace à étancher (8).

4. Bague d'étanchéité selon l'une quelconque des revendications 1 à 3, **caractérisée en ce que** la pente (14) de la rainure de reflux (12) le long de la région d'étanchéité (3) est essentiellement constante.

5. Bague d'étanchéité selon l'une quelconque des revendications 1 à 4, **caractérisée en ce que** la largeur (15) de la rainure de reflux (12) le long de la région d'étanchéité (3) est essentiellement constante.

6. Bague d'étanchéité selon l'une quelconque des revendications 1 à 5, **caractérisée en ce que** la largeur et/ou la pente (19, 20) de la rainure de reflux (12) le long de la région d'étanchéité (3) est variable.

7. Bague d'étanchéité selon l'une quelconque des revendications 1 à 6, **caractérisée en ce que** la région d'étanchéité (3), partant de la région de fixation (2), est pré-cintrée axialement dans la direction de l'environnement (11).

8. Bague d'étanchéité selon l'une quelconque des revendications 1 à 7, **caractérisée en ce que** la manchette d'étanchéité (1) se compose d'un composite en PTFE.

9. Capot de fermeture de boîtier comprenant une bague d'étanchéité selon l'une quelconque des revendications 1 à 8, qui est intégrée dans le capot de fermeture de boîtier.
